# EUROPEAN PATENT APPLICATION

(11) **EP 2 328 075 A1**
(43) Date of publication of application: **01.06.2011**
(21) Application number: 09812831.7
(22) Date of filing: 04.08.2009
(51) Int. Cl.: G06F 9/308

(54) **INFORMATION PROCESSING DEVICE**

(30) Priority: 10.09.2008 JP 2008232106
(71) Applicant: Renesas Electronics Corporation, Kanagawa 211-8668 (JP)
(72) Inventor: NAKAYA, Hiroaki, Kokubunji-shi Tokyo 185-8601 (JP); YAMADA, Tetsuya, Kokubunji-shi Tokyo 185-8601 (JP); KATO, Naoki, Kokubunji-shi Tokyo 185-8601 (JP)
(74) Representative: Calderbank, Thomas Roger
(86) International application number: PCT/JP2009/003710
(87) International publication number: WO 2010/029682

(57) **Abstract**

An information processing device is provided, in which a bit operation is performed without degradation in performance of a bus. An information processing device includes a CPU which fetches and executes an instruction, and a peripheral module which includes internally a register rewritable by the CPU, and is coupled to the CPU via a bus. The CPU has a function of issuing a bus command for commanding a bitwise write operation to the register comprised in the peripheral module, in order to execute a bit operation command fetched. When the bus command is issued, the peripheral module executes a bitwise write operation for the register. Since the CPU does not need to lock the bus after the bus command is issued, a bit operation can be performed without degradation in performance of the bus.

## Description

### TECHNICAL FIELD

The present invention relates to an information processing device, especially to a bit operation of a register included in a peripheral module coupled to a CPU (central processing unit).

### BACKGROUND ART

In the category of an information processing device, there are a micro-processor, a micro controller, a digital signal processor, an image signal processor, and a voice signal processor. The micro-processor, as an example of the information processing device, is required to shorten data access time from a CPU to each peripheral module in a semiconductor chip, in order to speedily execute bit operation processing which is one of data processing inside the chip. In order to realize such shortening of the access time, what has been widely carried out is improvement in an operating frequency of the micro-processor, speeding up of a bus to which each peripheral module in a chip is coupled, and addition of a new command for a bit operation.

However, the micro-processor has been configured so as to perform data processing in units of a certain number of bits (8 bites/16 bits/32 bits) for a peripheral register, a memory, etc., and it is impossible for the micro-processor to directly order a peripheral module to perform a bit operation in which only one bit is manipulated. Therefore, when performing a bit operation, an operation of read-modify-write (henceforth abbreviated to "RMW") is necessary, in which data is once read from a peripheral register, a memory, etc. to a CPU in units of a certain number of bits (8 bits/16 bits/32 bits), only one bit of the data read is changed, and the data is again returned to the peripheral module.

However, during the operation of RMW, the CPU locks a bus (fixing to the state where no other operation than the bit operation processing is not accepted) , and the CPU itself cannot execute other commands during the operation of RMW. Therefore, a bit operation system which does not need the RMW operation is required so that the bit operation processing is shortened and the CPU can execute other commands.

As a bit operation system which can eliminate such an RMW operation, a system disclosed by Patent Document 1 can be cited. Patent Document 1 discloses technology in which, for the purpose of speeding up a bit operation, a memory address area is added for each bit which undergoes a bit operation in order to be allocated to a 32-bit address, thereby allowing a desired bit operation to be performed when data is written in the additional memory address area by a normal command (write command). By writing data into the additional memory address area in units of a certain number of bits (8 bits/16 bits/32 bits), the necessity for reading data into the CPU for modification is avoided, that is, an RMW operation in the CPU becomes unnecessary; accordingly, the bit operation can be accelerated. Since access to the additional memory address area can be performed by a normal command, it is not necessary to add a new command for the bit operation.

### Patent Document

(Patent Document 1) U. S. Patent Application Publication No. 2005/0177691

### DISCLOSURE OF THE INVENTION

### PROBLEMS THAT THE INVENTION IS TO SOLVE

As described above, Patent Document 1 discloses a system in which, a memory address area with a certain bit width (8 bints/16 bits/32 bits) is added for a bit operation, and when data is written into the memory address area by a normal command (write command in units of 8 bits/16 bits/32 bits), an LSU (load store unit) converts the write operation into an RMW operation and performs the bit operation. According to the system, since the LSU performs the bit operation, what is needed for the CPU is only to write data into the additional memory address area; accordingly, the execution time of the CPU for the bit operation processing is reduced.

However, in the present system, performing the bit operation is moved from the CPU to the LSU, and the LSU performs the RMW operation. Therefore, processing time of the bit operation itself for a peripheral module is not reduced. In a CPU in which plural cores are mounted, it is necessary to lock a bus during the RMW operation, in order to prevent rewriting of data by command from other cores during the RMW operation. Since a CPU can perform a bit operation only by a normal command, the CPU can execute other commands, without waiting for the completion of the RMW operation by the LSU. However, since it is necessary to lock the bus while the LSU is performing the RMW operation, there is a possibility that performance of the bus may fall.

The purpose of the present invention is to provide technology for performing a bit operation, without degradation in performance of a bus.

Another purpose of the present invention is to provide technology for speeding up a bit operation. In the technology, a new bus command (a one-bit write operation command) is added instead of adding a memory address area, and a bus state controller which controls a peripheral module coupled to an external address space grasps a situation where the coupled module supports or does not support the new bus command, and switches between the new bus command and the old bus command.

The above and other purposes and new features will become clear from description of the specification and the accompanying drawings of the present invention.

### MEANS FOR SOLVING THE PROBLEMS

The following explains briefly typical inventions to be disclosed by the present application.

That is, an information processing device includes a CPU which can fetch and execute a command, and a peripheral module which includes internally a register rewritable by the CPU, and is coupled to the CPU via a bus. The CPU has a function of issuing a bus command for commanding a bitwise write operation to the register included in the peripheral module, in order to execute a bit operation command fetched. When the bus command is issued, the peripheral module executes a bitwise write operation for the register. Therefore, the CPU does not need to lock the bus after issuing the bus command. Accordingly, it is possible to perform a bit operation, without degradation in performance of the bus.

### EFFECTS OF THE INVENTION

The following explains briefly an effect obtained by the typical inventions to be disclosed in the present application.

That is, according to the present invention, a bit operation can be performed, without degradation in performance of a bus. A new bus command is added, and a bus state controller switches between the new bus command and the old bus command, and performs a bit operation. Therefore, it is possible to improve speeding-up of the bit operation, even if an old bus command-supporting module and a new bus command-supporting module are intermingled.

### BRIEF DESCRIPTION OF THE DRAWINGS

FIG. 1 is an explanatory diagram illustrating a bus command changing bit operation in a microcomputer as an example of an information processing device according to the present invention;
FIG. 2 is a block diagram illustrating an example of configuration of the microcomputer;
FIG. 3 is a block diagram illustrating an example of configuration of a bus state controller in the microcomputer;
FIG. 4 is a block diagram illustrating an example of configuration of a command judging controller in the bus state controller;
FIG. 5 is a block diagram illustrating an example of configuration of a functional module which supports a new bus command BC1 in the microcomputer;
FIG. 6 is a flow chart of a bit operation in the microcomputer; and
FIGS. 7(A) and 7(B) are an explanatory diagram illustrating an example of a bit operation of a new bus command BC1 supporting module and a non-supporting module.

### BEST MODE FOR CARRYING OUT THE INVENTION

### 1. Summary of the embodiments

First, an outline of a typical embodiment of the invention disclosed in the present application is explained. A numerical symbol of the drawing referred to in parentheses in the outline explanation about the typical embodiment only illustrates what is included in the concept of the component to which the numerical symbol is attached.
<1> An information processing device (10) according to a typical embodiment of the present invention includes a CPU (101, 102) which fetches and executes a command, and a peripheral module (M1, M2, M3) which includes internally a register rewritable by the CPU and is coupled to the CPU via a bus. The CPU has a function of issuing a bus command for commanding a bitwise write operation to the register included in the peripheral module, in order to execute a bit operation command fetched.
   The CPU executes a bitwise write operation for the register in the peripheral module, when the bus command is issued. Therefore, since it is not necessary to lock the bus after the bus command is issued, a bit operation can be performed, without degradation in performance of the bus.
<2> In the paragraph <1>, the peripheral module includes a bit operation controller which executes the bitwise write operation to the register, in response to the bus command issued by the CPU.
<3> The information processing device (10) includes a CPU (101, 102) which issues a bus command for commanding a bitwise write operation when executing a fetched command, and a peripheral module (M1, M2, M3) coupled to the CPU via a bus. The peripheral module includes a register (52) rewritable by the CPU and a bit operation controller (51) which executes a bitwise write operation for the register, in response to the bus command.
<4> In the paragraph <3>, the information processing device may be configured such that the bus command issued by the CPU is transferred to the bit operation controller via the bus.
<5> In the paragraph <3>, the information processing device may be configured such that the bus command issued by the CPU is transferred to the bit operation controller via an exclusive line. When employing the exclusive line, the bus command can be transferred at higher speed than when employing the bus.
<6> The information processing device (10) includes a CPU (101, 102) which issues a bus command for commanding a bitwise write operation when executing a fetched command, a peripheral module (M1, M2, M3) coupled to the CPU via a bus, and a bus state controller (105) which is coupled to the bus and performs bus state control. The bus state controller includes a first circuit (31) which makes a distinction of whether the peripheral module supports the bus command, a second circuit (32) which converts the first bus command issued by the CPU into a second bus command supported by the peripheral module, and a third circuit (33) which outputs to the peripheral module selectively the first bus command transferred from the CPU and the second bus command outputted by the second circuit, based on the distinction made by the first circuit.
   In response to the first bus command from the CPU, it is determined whether the bus state controller outputs the first bus command or converts the first bus command into the second bus command. Accordingly, the CPU just has to output the first bus command of a one-bit write operation. Even when the bus state controller outputs the second bus command and an RMW operation occurs, another command can be executed without waiting for the completion of the RMW operation. Therefore, it is possible to perform the bit operation, without degradation in performance of the bus.
<7> In the paragraph <6>, when the bus command converted by the second circuit is outputted via the third circuit, the second circuit performs a read-modify-write operation, by reading data from the peripheral module, changing a part of the data read, and rewriting the data changed to the peripheral module.

### 2. Further detailed description of the embodiments

Next, an embodiment is explained in full detail.

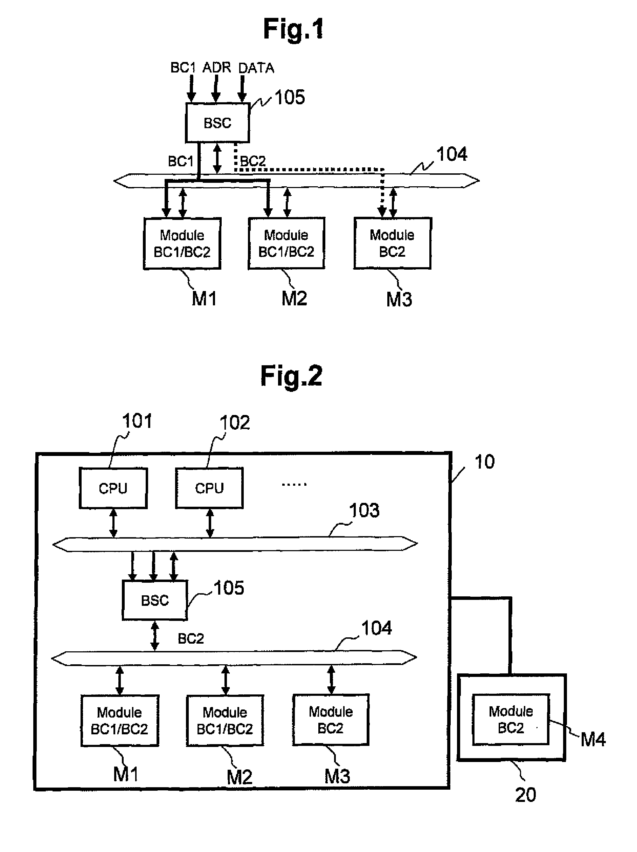

FIG. 2 illustrates a microcomputer as an example of an information processing device according to the present invention. The microcomputer 10 illustrated in FIG. 2 includes CPUs 101 and 102, a bus state controller (BSC) 105, and peripheral modules (Module) M1, M2, and M3. The microcomputer 10 is fabricated over one semiconductor substrate, such as a single crystal silicone substrate, by a well-known semiconductor integrated circuit manufacturing method. The CPUs 101 and 102 are coupled to a first bus 103 and the peripheral modules M1, M2, and M3 are coupled to a second bus 104. The first bus 103 and the second bus 104 are coupled via the bus state controller 105. An external memory 20 is arranged in the exterior of the microcomputer 10. A peripheral module M4 is arranged in the interior of the external memory 20. The CPUs 101 and 102 respectively fetch a command from a program memory (not shown) and execute it. The peripheral modules M1, M2, M3, and M4 have a predetermined function, respectively.

Next, the following explains a bus command changing bit operation in the microcomputer 10 of the configuration described above.

FIG. 1 illustrates schematically a bus command changing bit operation in the microcomputer 10 illustrated in FIG. 2.

The bus command changing bit operation in the microcomputer 10 of the configuration described above is carried out as follows. That is, the CPUs 101 and 102 output a new bus command BC1 (the first bus command) to the bus state controller 105, and the bus state controller 105 performs the bit operation, for every peripheral modules, by judging whether the new bus command is supported or not and switching between the new bus command and the old bus command (the second bus command). By the present operation system, it is possible to execute the bit operation, even when a new bus command supporting module and a new bus command non-supporting module are intermingled in the peripheral modules coupled to the bus. For convenience of explanation, it is assumed that the peripheral modules M1 and M2 support both of the new bus command BC1 and the old bus command BC2, and that the peripheral modules M3 and M4 support only the old bus command BC2 . For the new bus command (BC1) supporting modules M1 and M2, speeding up of the bit operation can be enhanced as described in the following. For the new bus command non-supporting modules, the bus state controller 105 converts the new bus command BC1 into the old bus command BC2, and executes an RMW operation which a CPU used to perform. That is, the CPUs 101 and 102 can execute the bit operation only by issuing the new bus command BC1 for the bus state controller 105; accordingly, it becomes possible for the CPUs 101 and 102 to execute other commands immediately after outputting the new bus command BC1. Since the new bus command supporting modules M1 and M2 can perform a one-bit write operation, instead of the RMW operation, it is possible to realize speeding-up of the bit operation itself.

Here, the bus command is a command in units of a certain number of bits (for example, 8 bits, 10 bits, etc.) which a command interpreting module (decoder) in the CPU issues to the peripheral module, in order that the CPUs 101 and 102 execute a command fetched. For example, the CPU 101 or the CPU 102 reads out a command in a program memory (not shown) in which a bit operation command is stored, and interprets the command by the decoder in the CPU concerned. After interpreting the command, the decoder outputs bus commands, such as read and write, which are the commands for commanding a peripheral module on necessary operations of the peripheral module in order to execute the bit operation command. The bus command is inputted, from the CPU 101 or the CPU 102, to the peripheral module via an exclusive line or the bus 103 and the bus 104. When employing the exclusive line, the bus command can be transferred at higher speed when employing the bus 103 and the bus 104.

The proposed new bus command BC1 (the first bus command) is extension of the old bus command BC2 (the second bus command). There are read, write, etc. in the old bus command BC2, as described above. However, the old bus command BC2 is a command which directs read, write, etc. in units of a byte or a word, and it is not a command which directs write in units of one bit. As compared with this, the new bus command BC1 is a command which directs a write operation in units of one bit.

There are two kinds of methods of embedding a bit location of a bit operation target and bit operation information. The first method is of embedding information at a space area of data. In this method, the access units to data are a byte and a word, and the units of write is the units of a bit. For example, the new bus command is a command for accessing data in units of a byte and operating a certain bit in the byte data. The bit location of the bit operation and the bit operation information at this time are embedded at the upper unused bits of data.

The second method is of adding bit position information and bit operation information to a bus command. Since the first method embeds the bit position information and the bit operation information at the upper unused bits of data, the units of data access are limited to the units of a byte or a word. However, since the second method adds the operating bit position information and the bit operation information to a bus command, the units of data access can be set up arbitrarily besides the units of a byte and a word.

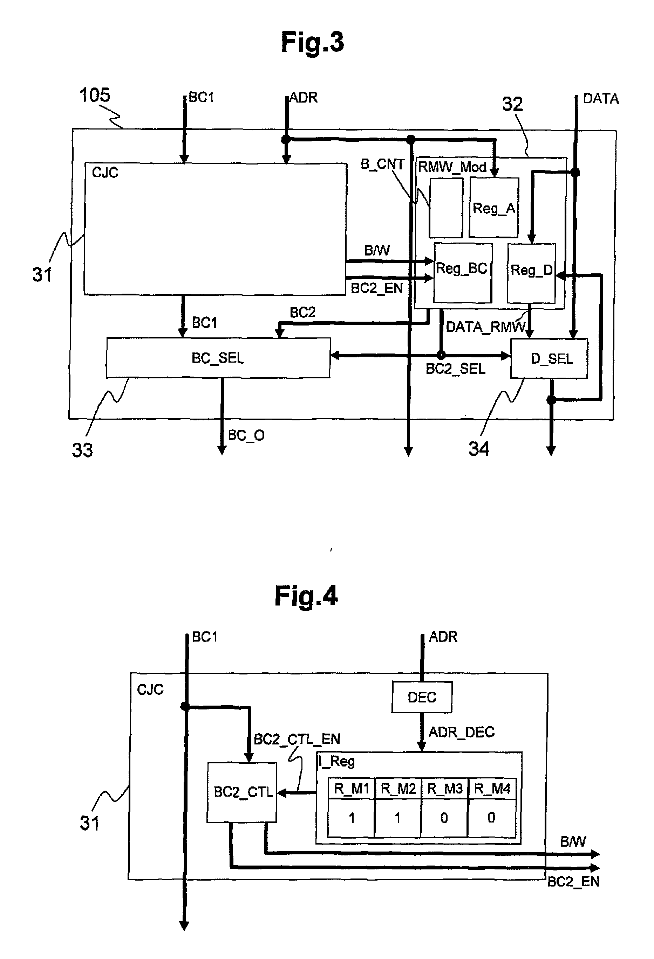

In the bus command changing bit operation in the present embodiment, in order to achieve a speedup of a bit operation, the bus state controller 105 outputs the new bus command BC1 received from the CPU as it is, and executes a one-bit write operation, or, the bus state controller 105 converts the new bus command BC1 into the old bus command BC2, and outputs the old bus command BC2 to perform the RMW operation. Here, a configuration of the bus state controller 105 and operation are explained with reference to FIG. 3.

FIG. 3 illustrated an example of a configuration of the bus state controller 105.

As illustrated in FIG. 3, the bus state controller 105 includes four peripheral modules internally as follows. That is, the four peripheral modules are a command judging controller (CJC) 31, an RMW module (RMW_Mod) 32, a bus command selector (BC_SEL) 33, and a data selector (D_SEL) 34.

The command judging controller 31 has a function to determine whether to output the new bus command received from the CPUs 101 and 102 as it is, or to output after converting the new bus command into the old bus command, by determining whether the new bus command is supported or not, for every new bus command supporting modules and every new bus command non-supporting modules, which are coupled to the bus.

The RMW module 32 outputs the old bus command BC2 and executes the RMW operation, when the command judging controller 31 has determined to output the old bus command.

The bus command selector 33 selects one of the new bus command BC1 outputted by the command judging controller 31, and the old bus command BC2 outputted by the RMW module 32, according to a signal BC2_SEL (an old bus command selection signal) outputted by the RMW module 32.

The data selector 34 selects whether to output data (DATA) outputted by the CPUs 101 and 102 as it is or to output data DATA_RMW outputted by the RMW module 32, according to the signal BC2_SEL outputted by the RMW module 32.

The command judging controller 31 receives a new bus command BC1 and address ADR from the CPUs 101 and 102, and outputs the new bus command BC1 as it is. On the basis of the information supplied by a register group I_Reg which has support/non-support information of the new bus command for every peripheral modules in the interior of the command judging controller 31, when an operation target module does not support the new bus command, the command judging controller 31 outputs, to the RMW module 32, access unit information B/W of the old bus command BC2 and an old bus command enable signal BC2_EN.

The RMW module 32 receives the address (ADR) and the data (DATA) from the CPUs 101 and 102, and the old bus command enable signal BC2_EN and the access unit information B/W from the command judging controller 31. The RMW module 32 outputs the old bus command BC2 and the old bus command selection signal BC2_SEL, and executes the RMW operation. Although not limited in particular, the present RMW module 32 includes a BC2 output controller B_CNT, and three data holding registers Reg_A, Reg_BC, and Reg_D. The BC2 output controller B_CNT receives the old bus command enable signal BC2_EN and the access unit information B/W from the command judging controller 31, and outputs the old bus command BC2 to the bus command selector 33, and the old bus command selection signal BC2_SEL to the bus command selector 33 and the data selector 34. Three data holding registers Reg_A, Reg_BC, and Reg_D are provided for preventing alteration of the bus command/address and alteration of data by means of the data (DATA) from the CPU 101 and 102 during the RMW operation. That is, the register Reg_A for address holds the address (ADR) received from the CPUs 101 and 102 during the RMW operation. The register group Reg_BC is employed for holding the old bus command enable signal BC2_EN and the access unit information B/W. That is, the register group Reg_BC can hold the old bus command enable signal BC2_EN and the access unit information B/W which have been received from the command judging controller 31, during the RMW operation. The data holding register Reg_D is used at the time of the RMW operation. The data holding register Reg_D is used for once reading data in units of a certain number of bits (8 bits/16 bits/32 bits) and adding alteration, in case that DATA received from the CPU is written in the coupled module, and also used for preventing new data (DATA) from entering from the CPUs 101 and 102 during the RMW operation.

FIG. 4 illustrates an example of a configuration of the command judging controller 31. As described above, the command judging controller 31 receives the new bus command BC1 and the address ADR from the CPUs 101 and 102, and outputs the new bus command BC1 as it is, and judges whether to output the access unit information B/W and the old bus command enable signal BC2_EN, on the basis of the information supplied by a register group I_Reg. The new bus command BC1 is branched to a path which bypasses the command judging controller 31, and a path which goes into a BC2 controller BC2_CTL. The address ADR is inputted into a decoder DEC and an output signal ADR_DEC of the decoder DEC is inputted into the register group I_Reg (registers R_M1, R_M2, R_M3, and R_M4 in FIG. 4). From information of certain two bits of the address ADR for example, the decoder DEC recognizes which of the coupled modules to be accessed, and outputs the pertaining information to the register group I_Reg. The register group I_Reg has the support/non-support information of the new bus command for the coupled modules.

Here, as an example, the following explains a case that the peripheral module M3 does not support the new bus command (in FIG. 4, R_M3: 0 ("1" means "supporting the new bus command" and "0" means "not supporting the new bus command")).

When the peripheral module M3 is selected by the address ADR and an output signal ADR_DEC of the decoder DEC is inputted into the register group I_Reg, determination on suppart/non-support of the new bus command is made. Since the information of not supporting the new bus command is written in the register R_M3 (data of "0" is held), a signal BC2_CTL_EN (an old bus command controller enable signal) is set as an enabled state. Since the signal BC2_CTL_EN is set as an enabled state, the BC2 controller BC2_CTL outputs an old bus command enable signal BC2_EN and an access unit information B/W.

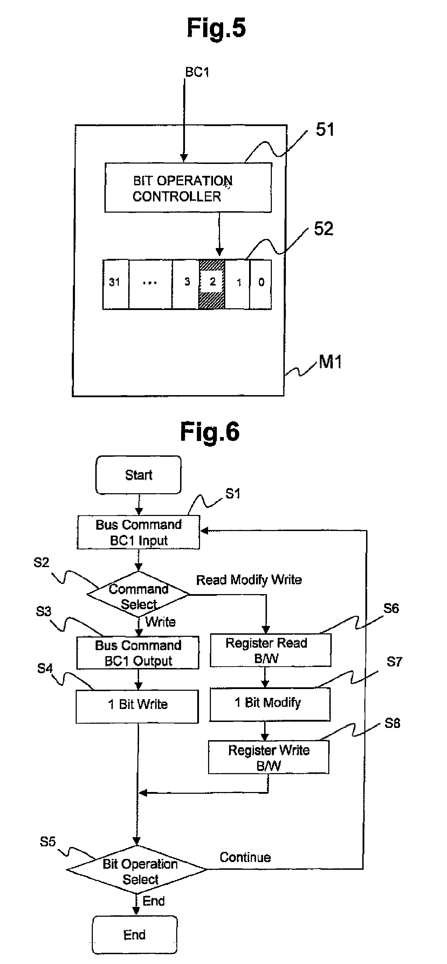

FIG. 5 illustrates an example of a configuration of the functional module M1 corresponding to the new bus command BC1.

As illustrated in FIG. 5, the functional module M1 includes a register 52 for setting a function of the functional module, and a bit operation controller 51 for performing a bit operation of the present register 52. Although not limited in particular, since the functional module M1 supports also the old bus command BC2, a bit operation controller (not shown) supporting the old bus command is provided. A bit operation controller 51 internally provided executes an operation for manipulating only one bit, in response to the new bus command BC1 from the bus state controller 105. FIG. 5 illustrates an example of operating the second bit of a 32-bit register. As described above, in response to the new bus command BC1 from the bus state controller 105, the functional module M1 operates one bit (the second bit indicated by a hatched column) of the 32-bit register. Through the operation, one-bit rewriting of the 32-bit register is performed.

FIG. 6 illustrates a flow chart of the bit operation.

First, a new bus command BC1 is inputted into the bus state controller 105 (S1: Bus Command BC1 Input). The bus state controller 105 determines whether the new bus command is supported (S2:Command Select). When the new bus command BC1 is supported (Write), the new bus command BC1 is outputted (S3: Bus Command BC1 Output). When the new bus command BC1 is not supported (Read Modify Write), the new bus command BC1 is converted into the old bus command BC2.

When outputting the new bus command BC1, one bit of the coupled module is written in and the system moves to determining an end of the bit operation.

When converting the new bus command BC1 into the old bus command BC2, the register is read in units of the access unit information B/W (S6: Register Read B/W), one bit of them is changed (S7: 1 Bit Modify), and the register is written in units of the access unit information B/W (S8: Register Write B/W). Then, the system moves to determining an end of the bit operation (S5: Bit Operation Select).

In the determining an end of the bit operation, when not ending the bit operation, the system returns to the processing (S1) in which the new bus command BC1 is inputted into the bus state controller 105, and when ending the bit operation, the processing under the present flow chart is terminated (End).

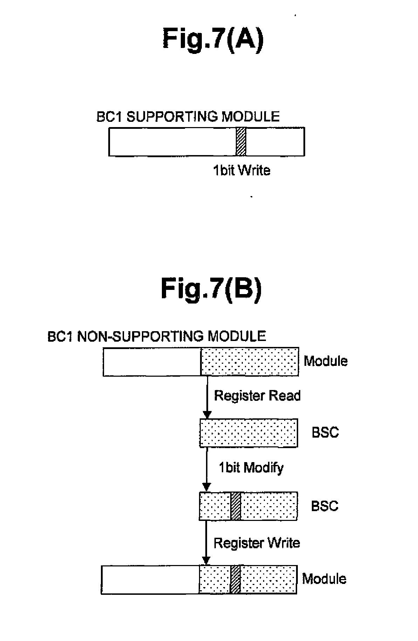

FIGS. 7(A) and 7(B) illustrates an example of a bit operation of the new bus command (BC1) supporting module and the new bus command (BC1) non-supporting module.

In the case of the new bus command (BC1) supporting module, as illustrated in FIG. 7(A), only one bit in question is rewritten in the new bus command BC1 supporting module. On the contrary, in the case of the new bus command BC1 non-supporting module, as illustrated in FIG. 7(B), the bus state controller (BSC) 105 intervenes and one bit rewriting by the RMW is performed in the bus state controller (BSC) 105.

According to the example described above, the following working-effects can be obtained.
(1) The bus state controller 105 receives the new bus command from the CPU, and determines whether to output the new bus command or to convert the new bus command into the old bus command. When the old bus command is outputted, the RMW operation, which a CPU has been executing in the past, is executed by the bus state controller 105. Accordingly, the CPUs 101 and 102 just have to output the new bus command of the one-bit write operation. Even when the bus state controller 105 outputs the old bus command and an RMW operation occurs, another command can be executed without waiting for the completion of the RMW operation.
(2) Owing to the working-effect (1) described above, it is possible to enhance the efficiency improvement in processing by the microcomputer 10.

As described above, the invention accomplished by the present inventors has been concretely explained. However, it cannot be overemphasized that the present invention is not restricted to the embodiments, and it can be changed variously in the range which does not deviate from the gist.

The above explanation is made mainly for the case where the invention made by the present inventors is applied to a microcomputer, which is the application field described as the background. However, the present invention is not limited to the case.

### INDUSTRIAL APPLICABILITY

The present invention is applicable as well to a micro controller, a digital signal processor, an image signal processor, a voice signal processor, etc.

## Claims

1. An information processing device comprising:
a CPU operable to fetch and execute a command; and
a peripheral module comprising internally a register rewritable by the CPU, and being coupled to the CPU via a bus,
wherein, in order to execute a bit operation command fetched, the CPU has a function of issuing a bus command for commanding a bitwise write operation to the register comprised in the peripheral module.

2. The information processing device according to Claim 1, wherein the peripheral module comprises a bit operation controller operable to execute the bitwise write operation to the register, in response to the bus command issued by the CPU.

3. An information processing device comprising:
a CPU operable to issue a bus command for commanding a bitwise write operation when executing a fetched command; and
a peripheral module coupled to the CPU via a bus,
wherein the peripheral module comprises:
a register rewritable by the CPU; and
a bit operation controller operable to execute a bitwise write operation to the register, in response to the bus command.

4. The information processing device according to Claim 3,
wherein the bus command issued by the CPU is transferred to the bit operation controller via the bus.

5. The information processing device according to Claim 3,
wherein the bus command issued by the CPU is transferred to the bit operation controller via an exclusive line.

6. An information processing device comprising:
a CPU operable to issue a first bus command for commanding a bitwise write operation when executing a fetched command;
a peripheral module coupled to the CPU via a bus; and
a bus state controller coupled to the bus and operable to perform bus state control,
wherein the bus state controller comprises:
a first circuit operable to make a distinction of whether the peripheral module supports the bus command;
a second circuit operable to convert the first bus command issued by the CPU into a second bus command supported by the peripheral module; and
a third circuit operable to output to the peripheral module selectively the first bus command transferred from the CPU and the second bus command outputted by the second circuit, based on the distinction made by the first circuit.

7. The information processing device according to claim 6,
wherein, when the bus command converted by the second circuit is outputted via the third circuit, the second circuit performs a read-modify-write operation, by reading data from the peripheral module, changing a part of the data read, and rewriting the data changed to the peripheral module.
